# EUROPEAN PATENT SPECIFICATION

(11) **EP 1 043 360 B1**
(45) Date of publication and mention of the grant of the patent: **04.08.2004**
(21) Application number: 00106390.8
(22) Date of filing: 24.03.2000
(51) Int. Cl.: C08L 23/14, B29C 55/12, B65C 3/00, B32B 27/32

(54) **Uniaxially shrinkable films, process for its production and use for wraparound labelling.**
Einachsig schrumpfbare Folie, Verfahren zu ihrer Herstellung und Verwendung als Umhüllungsetikett.
Film à retrecissement uniaxial, procédé pour sa fabrication et utilisation comme etiquette enveloppante.

(30) Priority: 09.04.1999 IT MI990721
(43) Date of publication of application: 11.10.2000
(73) Proprietor: Bimo Italia S.p.A., 66041 Atessa (Chieti) (IT)
(72) Inventor: Scarati, Mario Alberto, 20100 Milano (IT); Del Lupo, Angelo, 66054 Vasto, Chieti (IT); Di Costanzo, Carmelo, 66034 Lanciano, Chieti (IT)
(74) Representative: Sama, Daniele, Dr.

(56) References cited:
- EP-A- 0 171 733
- EP-A- 0 400 456
- DE-A- 4 141 989
- US-A- 5 639 816
- US-A- 5 756 169
- DATABASE WPI Derwent Publications Ltd., London, GB; AN 1984-110219 XP002140666 & JP 59 049958 A (GUNZE KK), 22 March 1984 (1984-03-22)

## Description

The present invention refers to uniaxially heat-shrinkable plastic films obtainable by using a formulation that improves the processability during the film extrusion and orientation (lower film breakage). These films are obtained by an horizontal simultaneous stretching machine, wherein it is possible to modulate, i.e. to regulate continuously the stretching ratios.

More in detail this invention refers to uniaxially heat shrinkable films having in comparison with those of the prior art a comparable shrinkage in the transverse direction and an improved heat shrinkage in the longitudinal direction.

The plastic films of the present invention, besides to said improved shrink properties, have an improved processability during extrusion and film stretching (orientation), as shown by the substantial absence of film breakage during the film stretching step.

The aforementioned shrink properties (high shrink in the longitudinal direction and negligible shrink in transverse direction) are required, in particular, by the labelling technique known as wraparound labelling of bottles, cans, and containers, where the aforementioned items have a shape different from a cylinder (contour-shaped).

In the wraparound labelling process of containers a roll of printed film, placed with its axis vertical on a suitable spindle, is unwound by the labelling machine. The leading edge of the label, which is formed by transverse cutting the printed roll of film, is applied onto the item to be labelled with application of a vertical strip of hot-melt (wax). The container to be labelled rotates around its vertical axis thus pulling the label, which wounds around the container. The trailing edge of the label, automatically cut from the film roll, is overlapped onto the leading edge of the label with another application of a vertical strip of hot-melt.

Cylindrical shaped containers such as bottles can be labelled with rigid plastic films which are dimensionally stable, i.e. they are not heat shrinkable, such as standard packaging-grade bioriented heat-set polypropylene films.

Containers having a different shape from that above cannot generally be labelled with dimensionally stable or heat-set films, since adhesion is poor.

In the case of wraparound labelling of contour-shaped items, it is necessary to use a plastic film which is thermally shrinkable in longitudinal direction and thermally stable in transverse direction. The wraparound labelling process is equivalent to that of a straight wall bottle or container, but after labelling, the labelled item undergoes a heat shrink process (passage in an oven, hot air jets, etc.), to achieve a tight fit of the label to the contoured surface.

The thermal stability of the label in the transverse direction is necessary to avoid an unacceptable distortion of the label when subjected to a heat-shrink process.

The preparation of uniaxially shrinkable films which exhibit longitudinal shrinkage higher than transversal shrinkage, is known.

US-A-5,756,169 discloses biaxially oriented polyolefin films containing a polypropylene blend of propylene homopolymer and/or copolymer and/or polyolefins having 2 to 6 carbon atoms, for example polyethylene, in particular LDPE and LLDPE.

Patent application WO 96/07699 describes uniaxially shrinkable films wherein shrinking in the longitudinal direction (MD) is higher than that in the transverse direction (TD). To prepare said films propylene copolymers or blends of the aforementioned polymers with alpha-olefin homopolymers are used. Preferred blends are those based on propylene copolymers with propylene homopolymers (PP). Experiments carried out by the Applicant have shown that by using a propylene homopolymer blended with propylene copolymers it is not possible to increase the MD shrinkage above certain limits. In facts, if one tries to increase the longitudinal stretching ratio, in order to obtain improved heat shrinking properties in the longitudinal direction, during the film stretching phase film breakages occur (see the examples).

U.S. pat. 5,292,561 describes heat-shrinkable films and exemplifies compositions based on polypropylene or polypropylene plus hydrogenated hydrocarbon resins.

The heat shrink values in MD and TD directions are of the same order of magnitude as those indicated in WO' 699 patent.

In particular the heat shrink values of said films at the temperature of 100°C are higher than 10% in the machine direction MD (longitudinal) and lower or equal to 2% in the transverse direction TD. Experiments carried out by the Applicant have shown that by using the homopolymer of propylene it is not possible to increase the MD shrinkage above certain values. In fact if one tries to increase the stretching ratio in order to obtain improved heat shrink properties in the longitudinal direction during the film stretching step are experienced film breakages. When hydrogenated hydrocarbon resins in admixture with polypropylene are used, heat shrinkage increases both in the longitudinal direction and in the transverse direction. See the examples.

The films described in said patents are used for the wraparound labelling of containers. These films must have as essential features an high heat shrinkage in the longitudinal direction, preferably the highest achievable, and the lowest heat shrinkage in the transverse direction. Only in this way it is obtained an optimal adhesion of the wraparound label to the containers, even though they have an irregular shape, without modifying the label transverse dimensions.

European patent 498,249 describes propylene homopolymers (PP) and propylene copolymers and their blends. In the examples are used propylene homopolymers. The same considerations mentioned before apply to this patent.

From patent application WO 96/2386 are known multilayer heat shrinkable films wherein the central core is based on isotactic propylene homopolymer blended with a modifier that reduces the crystallinity of PP, such as atactic PP, syndiotactic PP, ethylene/propylene copolymers, LLDPE. The use of such modifiers allows to increase heat shrinkage in MD direction in comparison with the film made of the homopolymer alone. To this patent the same comments made above for the other patents of the known art apply.

It was felt the need to have available a polymer composition for the manufacture of wraparound labelling films having an improved heat shrinkage in the longitudinal direction, the highest possible, and the least possible heat shrinkage in the transverse direction, combined with an improved processability of the composition during film extrusion and biorientation step.

An improved processability during the process steps mentioned before allows to use higher longitudinal stretching ratios without the occurrence of film breakages.

This is a remarkable advantage from an industrial point of view, since it allows to yield very high heat shrink values in the longitudinal direction and low heat shrink values in the transverse direction by a reliable and continuous process.

It has been unexpectedly and surprisingly found by the Applicant that by using a particular film orientation machine, in details a simultaneous stretching line where the stretching ratios can be modulated in a continuous way, it is possible to obtain films having high MD (machine direction) shrinkage and low TD (transverse direction) shrinkage.

Further, it has been unexpectedly found that by using particular polymer compositions for the manufacturing of the plastic film it is possible to improve even more the combination of film properties mentioned above.

An object of the present invention are uniaxially heat shrinkable plastic films for wraparound labelling, said films obtainable by extrusion and orientation on a simultaneous stretching line where the stretching ratios can be modulated in a continuous way, said films made of a polymer composition comprising the following polymers:
a) propylene copolymers having at least another comonomer containing at least one ethylenic unsaturation, the aforementioned comonomer preferably chosen between alpha-olefins having from 2 to 12 carbon atoms, the total percentage by weight of comonomers comprised between 0.5 to 25% and preferably between 1 to 7%, and
b) an ethylene homopolymer, or ethylene copolymers having at least another comonomer containing at least an ethylenic unsaturation, said comonomer preferably chosen between alpha-olefins having from 4 to 12 carbon atoms, the total amount of comonomers comprised between 0.5 and 10%, preferably between 1 to 7% by weight, the quantity of b) component as percentage by weight is comprised between 2 to 30%, preferably from 4 to 15%; said uniaxially heat shrinkable films having an MD shrinkage, measured at 130°C for 5 min. according to the OPMA TC4 method, in the range of 30% or higher, and a TD shrinkage in the range of 2-3%.

The preferred b) component is the ethylene copolymer as defined above.

It has been unexpectedly and surprisingly found that by using polyethylene (PE) in blend with propylene copolymers, optionally containing a propylene homopolymer (PP) in a quantity generally comprised between 0 to 10% by weight, preferably from 0 to 5% by weight, it is possible to improve the processability in the steps of extrusion and film stretching, and it is obtained a further improvement of the heat shrinkage in the longitudinal direction without increasing the heat shrinkage in the transverse direction, since higher MD stretching ratios can be used during film production.

Said high MD stretching ratios can be obtained only by using a simultaneous orientation line wherein the stretching ratios can be modulated in a continuous way, such as by applying the technology and using the machine described in U.S.P. 4,853,602 , and following patents pertaining to said technical field.

Component a) is preferably a propylene/ethylene copolymer.

The comonomers having at least one unsaturation as indicated in a) are, e.g., ethylene, butene, hexene, octene, decene, dodecene, preferably ethylene.

The comonomers having at least one unsaturation as indicated in b) are, e.g., butene, hexene, octene.

The ethylene polymer indicated in b) is generally a commercially available low density polyethylene (LDPE) or linear low density polyethylene (LLDPE).

Components a) and b) of the present invention are usually formulated with conventional additives such as slip agents such as e.g. erucamide, and/or antiblocking agents such as silica, and/or antistatic agents such as glycerol monostearate. The total quantities of additives are those most frequently used in polymer film formulations and comprised from 0.05 to 4% by weight and preferably from 0.1 to 2% by weight on the total composition.

A further object of the present invention is a simultaneous film stretching process comprising the steps herewith mentioned, being this process carried out by the machine described in U.S.P. 4,853,602 , and following patents pertaining to this technical field.

The process comprises the following steps:
- preparation of a primary film having thickness comprised between about 2 and 3 mm by melting of the polymeric composition of the invention,
- extrusion of the thick primary film on a flat extrusion die,
- quenching and compaction of the primary film onto the surface of a cooled chill roll,
- heating of the primary film at a temperature of approximately 100-150°C, preferably approximately 100-120°C, preferably by an I.R. unit,
- stretching and orientation of the primary film through a simultaneous orientation process by holding the primary film edges with a series of clips installed on slides, each of them independently driven by linear induction electric synchronous motors, where the clip/slide assemblies travel along diverging stretching rails;
the linear induction synchronous motors fed with AC currents which phase and frequency are modulated in such a way that the clips/slides follow a pre-programmed longitudinal linear velocity profile in order to obtain the desired MD stretching ratios;
whereas the MD stretching ratios are a function of the longitudinal linear velocity profile and the TD stretching ratios are controlled by the actual spacing (divergence) between the stretching rails;
- the stretching frame used for the film stretching step comprises one or more sections within a stretching oven operating at a temperature of approx. 150-190°C;
- final heat setting in TD, which is carried out by subjecting the film to a slight TD retraction in one or more sections, obtainable by a convergence of the stretching rails in one or more sections of the stretching frame, at temperatures of about 130-140°C;
- the MD stretching ratios are comprised in the range from approx. 4/1 to 9/1, and the TD stretching ratios are comprised in the range from approx. 3/1 to 7/1.

The above temperature profile along the stretching oven is chosen in such a way to improve the orientation of the polymer chains. The conditions used, such as TD and MD stretching ratios, TD and MD relaxation ratios, orientation temperatures, are specifically described in the examples for the polymer compositions used.

Approximately, the MD stretching ratio is equal to the ratio between the linear speed of the film at the exit of the stretching frame and the speed at the entrance of the stretching frame. Due to the set-up of the stretching machine, this ratio is equivalent to the ratio between the AC frequency fed to the linear electric motors at the exit of the stretching frame, and the AC frequency fed to the linear motors at the entrance of the stretching frame.

Approximately, the TD stretching ratio is equivalent to the ratio between the film width at the exit of the stretching frame and the width at the entrance of the stretching frame.

The thickness of the produced film is comprised between about 10 and about 60 µm, preferably between 20 to 50 µm.

The films manufactured with the compositions of the present invention have an MD shrinkage, measured at 130°C for 5 min. according to the OPMA TC4 method, in the range of about 30% or higher, and a TD shrinkage in the range of about 2-3%.

The heat shrinkable plastic films of the present invention have excellent mechanical properties, as shown by their tensile properties (tensile strength at break, modulus of elasticity, elongation at break) measured in accordance to ASTM D 882. Also, their tear strength is good, and these films exhibit excellent optical properties as shown by gloss and haze values.

The plastic films of the present invention, after a suitable surface treatment (flame, corona, or plasma) can be laminated and printed with conventional techniques, and are used in shrink/wraparound labelling, namely of contour-shaped containers.

The following examples illustrate the scope of the invention and must not be construed as a limitation to the scope of the invention.

### EXAMPLE 1 (comparative)

### Preparation of a heat shrinkable polymer film made of a propylene homopolymer (polypropylene)

A film of a propylene homopolymer has been prepared by using the simultaneous stretching equipment described above.

After extrusion, the primary film is heated at a temperature of 120°C, then subjected to a simultaneous biaxial orientation stretching process, using the following stretching ratios:

| Transverse stretching ratio | | Longitudinal stretching ratio | |
|---|---|---|---|
| max. | exit of the stretching frame | max. | exit of the stretching frame |
| 6.3 | 5.3 | 8.5 | 8.5 |

The temperature in the stretching oven is comprised between 165 and 180°C, and in the final heat setting section between 130 and 140°C, the film speed at the exit of the stretching frame is of 200 m/min.

During film production an high number of film breakages have occurred, thus the above formulation is not suitable for manufacturing shrinkable films by a process wherein the high MD stretching ratios above indicated are used. MD stretching ratios should then be reduced by 30%, thus worsening the heat shrinkage properties.

The produced film has a thickness of 30 µm. The film is tested for tensile properties in accordance to ASTM D 882 and for heat shrinkage properties in accordance to OPMA TC 4 (a) at 130°C.
The results of the heat shrinkage test have been the following ones:

| | |
|---|---|
| Transverse heat shrinkage | 3% |
| Longitudinal heat shrinkage | 12% |

A film showing said heat shrink properties in the longitudinal direction is not suitable for wraparound labelling of contour-shaped containers and bottles.

### EXAMPLE 2 (comparative)

### Preparation of a heat shrinkable film made of a propylene copolymer containing 5% by weight of ethylene.

The propylene copolymer with 5% ethylene is supplied by MONTELL (EP® 3 grade).

The copolymer film has been prepared by using the simultaneous stretching equipment above described. After extrusion, the primary film is heated at a temperature of 115°C, and then subjected to a simultaneous biaxial stretching process, using the following stretching ratios:

| Transverse stretching ratio | | Longitudinal stretching ratio | |
|---|---|---|---|
| max. | exit of the stretching frame | max. | exit of the stretching frame |
| 6.3 | 5.3 | 8.5 | 8.5 |

The temperature of the stretching oven is comprised between 155 and 170°C, and in the final heat setting section between 130 and 135°C, the film speed at the exit of the stretching frame is of 200 m/min.

During film production some film breakages have been occasionally observed.

The produced film has a thickness of 35 µm. The film is tested for tensile properties in accordance to ASTM D 882 and for the heat shrinkage properties in accordance to OPMA TC 4(a) at 130°C.

The results of the heat shrinkage test have been the following ones:

| | |
|---|---|
| Transverse heat shrinkage | 2.5% |
| Longitudinal heat shrinkage | 20% |

The longitudinal heat shrinkage value is higher than that of the film of of example 1, and it is suitable for the use of the film in wraparound labelling but for certain contoured shapes (having a significant difference between the minimum and maximum diameter) the above MD shrink ratios are not sufficient.

Using higher MD stretching ratios (+ 20%) during the production cycle frequent film breakages occurred.

### EXAMPLE 3

### Preparation of a heat shrinkable film made of a blend of 95% by weight of a propylene copolymer containing 5% by weight of ethylene, and 5% by weight of an ethylene copolymer (LLDPE - linear low density polyethylene) containing 10% by weight of hexene-1.

The LLDPE copolymer containing 10% by weight of hexene-1 was commercially available by POLIMERI EUROPA under the trade name of CL® 106.

The copolymer film has been prepared using the simultaneous stretching equipment described above. After extrusion, the primary film is heated at a temperature of 115°C, then subjected to a simultaneous biaxial stretching process, using the following stretching ratios:

| Transverse stretching ratio | | Longitudinal stretching ratio | |
|---|---|---|---|
| max. | exit of the stretching frame | max. | exit of the stretching frame |
| 6.3 | 5.3 | 8.5 | 8.5 |

The temperature of the stretching oven is comprised between 155 and 170°C, and in the final heat setting section between 130 and 135°C, the film speed at the exit of the stretching frame is of 200 m/min.

During film production, no film breakage has been observed.

The produced film has a thickness of 30 µm. The film is tested for tensile properties in accordance to ASTM D 882 and for heat shrinkage properties in accordance to OPMA TC 4(a) at 130°C.

The results of the heat shrinkage test have been the following ones:

| | | |
|---|---|---|
| Transverse heat shrinkage | (TD) | 2,5% |
| Longitudinal heat shrinkage | (MD) | 30% |

The longitudinal heat shrink properties of said film afford an improved performance in wraparound labelling of contour-shaped containers and bottles in comparison with the films of examples 1 or 2. The heat shrink properties of the film of example 1 afford marginal performance in wraparound labelling of contour-shaped containers and bottles, whereas those of the film of example 2 are slightly better. The film of example 3 is clearly superior also by an industrial point of view since it shows longitudinal heat shrink properties superior to those of the films of both examples 1 and 2.

Besides this, said film can be manufactured by a substantially continuous process since, as indicated above, no film breakage is experienced during the orientation step.

### EXAMPLE 4

### Preparation of a heat shrinkable film made of a blend of 95% by weight of a propylene copolymer containing 5% by weight of ethylene, and 5% by weight of a LLDPE (linear low density polyethylene) copolymer containing 10% by weight of hexene-1 by using, in the manufacturing process, stretching ratios higher than in example 3.

A heat shrinkable film having the aforementioned composition has been prepared by using the simultaneous stretching equipment above described. The primary film heated at a temperature of 115°C, is subjected to a simultaneous biaxial orientation stretching process, using the following stretching ratios:

| Transverse stretching ratios | | Longitudinal stretching ratios | |
|---|---|---|---|
| max. | exit of the stretching frame | max. | exit of the stretching frame |
| 7.0 | 4.7 | 9.5 | 9.5 |

The temperature of the stretching oven is comprised between 155 and 170°C, and between 130 and 135°C in the dinal heat setting section, the film speed at the exit of the stretching frame is of 200 m/min.

During film production, no film breakage is experienced.

The produced film has a thickness of 31 µm. The film is tested for tensile properties in accordance to ASTM D 882 and for heat shrink properties in accordance to OPMA TC 4(a) at 130°C.

The results of the heat shrinkage test have been the following ones:

| | |
|---|---|
| Transverse heat shrinkage | 3.5% |
| Longitudinal heat shrinkage | 40% |

By using a film having said properties for the wraparound labelling of contour-shaped containers, the conformance of the heat shrunk label to items of irregular shape has been further improved in comparison with that of the film of the example 3.

Under the adopted film stretching conditions the film does not show breakages, so that the manufacturing process is a continuous one.

### EXAMPLE 5 (comparative)

The test described in example 2 has been repeated but using the following blend: 80% by weight of the propylene copolymer of example 2 with 20% by weight of propylene homopolymer.

The manufacture of the film, having a thickness of 32 µm, was very difficult, due to very frequent film breakages.

The heat shrink properties of the film determined according to the same test of example 2, have been the following:

| | |
|---|---|
| Transverse heat shrinkage | 2,5% |
| Longitudinal heat shrinkage | 15% |

The above demonstrates that the propylene homopolymer is hardly usable in blends with propylene copolymers to obtain heat shrinkable films that could be used according to the present invention.

The results of the examples show that the preferred compositions of this invention, i.e. blends of propylene copolymers with ethylene copolymers, have the best combination of properties in comparison with the other exemplified compositions.

It is noted that those compositions that do not show the optimal combination of properties for the application according to the invention are however superior to those of the prior art obtained with other processes. The results of the invention are surprising and unexpected since in the prior art it was not even suggested that with the process of simultaneous film stretching of the invention it would be possible to obtain films having a superior combination of properties in comparison with the processes of the prior art.

The results of the invention are surprising and unexpected, since it has never been mentioned in the prior art that a simultaneous orientation process of the type described could yield to uniaxially shrinkable films for wraparound labelling having a combination of properties superior to those of the known or commercially available films produced with different, obsolete, or conventional processes.

## Claims

1. Uniaxially heat shrinkable plastic films for wraparound labelling, said films obtainable by using a simultaneous stretching line wherein the stretching ratios can be modulated in a continuous way, said films made of polymers compositions comprising the following polymers:
a) propylene copolymers having at least another comonomer containing at least one olefinic unsaturation, preferably said comonomer chosen among alpha-olefins having from 2 to 12 carbon atoms, the total comonomer quantity comprised between 0.5 and 25% by weight, preferably between 1 to 7% by weight, and:
b) an ethylene homopolymer or ethylene copolymers having at least another comonomer containing at least one olefinic unsaturation, preferably chosen among alpha-olefins having from 4 to 12 carbon atoms, the total quantity of the comonomers comprised between 0.5 an 10% by weight, preferably between 1 to 7% by weight,
the quantity of b) being comprised between 2 and 30%, and preferably between 4 and 15% by weight;
said uniaxially heat shrinkable films having an MD shrinkage, measured at 130°C for 5 min. according to the OPMA TC4 method, in the range of 30% or higher, and a TD shrinkage in the range of 2-3%.

2. Plastic films according to claim 1, wherein component b) is an ethylene copolymer.

3. Plastic films according to claims 1 and 2, wherein component a) is a copolymer of propylene with ethylene.

4. Plastic films according to claims 1-3, wherein the comonomers containing at least one olefinic unsaturation indicated in b) are butene, hexene, octene

5. Plastic films according to claims 1-4, additivated with additives such as slip agents, and/or antiblocking agents, and/or antistatic agents; the total quantity of the additives comprised between 0.05% and 4%, preferably from 0.1 to 2% by weight.

6. Use of the plastic films according to claims 1-5 wraparound labelling.

7. Use according to claim 6, wherein the films are subjected to corona, flame or plasma treatments.

8. Process of horizontal simultaneous film stretching for preparing the plastic films of claims 1-5, comprising the following steps:
- preparation of a primary film haying thickness comprised between about 2 and 3 mm by melting of the polymeric composition,
- extrusion of the thick primary film on a flat extrusion die,
- quenching and compaction of the primary film onto the surface of a.cooled chill roll,
- heating of the primary film at a temperature of approximately 100-150°C, preferably approximately 100-120°C, preferably by an I.R. unit,
- stretching and orientation of the primary film through a simultaneous orientation process by holding the primary film edges with a series of clips installed on slides, each of them independently driven by linear induction electric synchronous motors, where the clip/slide assemblies travel along diverging stretching rails;
the linear induction synchronous motors fed with AC currents which phase and frequency are modulated in such a way that the clips/slides follow a pre-programmed longitudinal linear velocity profile in order to obtain the desired MD stretching ratios;
whereas the MD stretching ratios are a function of the longitudinal linear velocity profile and the TD stretching ratios are controlled by the actual spacing (divergence) between the stretching rails;
the stretching frame used for the film stretching step comprises one or more sections within a stretching oven operating at a temperature of approx. 150-190°C;
- final heat setting in TD, which is carried out by subjecting the film to a slight TD retraction in one or more sections, obtainable by a convergence of the stretching rails in one or more sections of the stretching frame, at temperatures of about 130-140°C;
- the MD stretching ratios are comprised in the range from approx. 4/1 to 9/1, and the TD stretching ratios are comprised in the range from approx. 3/1 to 7/1.

9. Uniaxially shrinkable plastic films for wraparound labelling, obtainable using a simultaneous film stretching machine wherein the stretching ratios are modulated in a continuous way, according to the process of claim 8.

10. Use of the plastic films according to claim 9 for wraparound labelling.

## Patentansprüche

1. Uniaxial wärmeschrumpfbare Kunststoffolien zur Rundumetikettierung, wobei die Folien erhältlich sind durch Verwendung einer Simultanreckanlage, bei der die Reckverhältnisse auf eine kontinuierliche Weise moduliert werden können, wobei die aus Polymerzusammensetzungen hergestellten Folien die folgenden Polymere umfassen:
a) Propylencopolymere mit mindestens einem anderen Comonomer, das mindestens eine olefinische Ungesättigtheit enthält, wobei das Comonomer vorzugsweise aus alpha-Olefinen mit 2 bis 12 Kohlenstoffatomen ausgewählt ist, wobei die Comonomergesamtmenge zwischen 0,5 und 25 Gew.-%, vorzugsweise zwischen 1 bis 7 Gew.-%, umfaßt, und
b) ein Ethylenhomopolymer oder Ethylencopolymere mit mindestens einem anderen Comonomer, das mindestens eine olefinische Ungesättigtheit enthält, vorzugsweise ausgewählt aus alpha-Olefinen mit 4 bis 12 Kohlenstoffatomen, wobei die Gesamtmenge der Comonomere zwischen 0,5 und 10 Gew.-%, vorzugsweise zwischen 1 bis 7 Gew.-%, umfaßt,
wobei die Menge an b) zwischen 2 und 30 Gew.-% und vorzugsweise zwischen 4 und 15 Gew.-% umfaßt;
wobei die uniaxial wärmeschrumpfbaren Folien eine MD-Schrumpfung, gemessen bei 130°C während 5 min gemäß dem OPMA TC4-Verfahren, im Bereich von 30 % oder höher und eine TD-Schrumpfung im Bereich von 2-3 % besitzen.

2. Kunststoffolien nach Anspruch 1, wobei die Komponente b) ein Ethylencopolymer ist.

3. Kunststoffolien nach den Ansprüchen 1 und 2, wobei die Komponente a) ein Copolymer von Propylen mit Ethylen ist.

4. Kunststoffolien nach den Ansprüchen 1-3, wobei die in b) angegebenen Comonomere, die mindestens eine olefinische Ungesättigtheit enthalten, Buten, Hexen, Octen sind.

5. Kunststoffolien nach den Ansprüchen 1-4, die additiviert sind mit Additiven wie Slipmitteln und/oder Antiblockiermitteln und/oder Antistatikmitteln, wobei die Gesamtmenge der Additive zwischen 0,05 und 4 Gew.-%, vorzugsweise von 0,1 bis 2 Gew.-%, umfaßt.

6. Verwendung der Kunststoffolien gemäß den Ansprüchen 1-5 zum Rundumetikettieren.

7. Verwendung nach Anspruch 6, wobei die Folien einer Korona-, Flammen- oder Plasmabehandlung unterzogen werden.

8. Verfahren zum horizontalen, simultanen Folienrecken zur Herstellung der Kunststoffolien gemäß den Ansprüchen 1-5, welches die folgenden Schritte umfaßt:
- Herstellen einer Primärfolie mit einer Dicke zwischen ungefähr 2 und 3 mm durch Schmelzen der Polymerzusammensetzung,
- Extrudieren der dicken Primärfolie auf einer Extrusionsbreitschlitzdüse,
- Quenchen und Verdichten der Primärfolie auf der Oberfläche einer gekühlten Kühlwalze,
- Erwärmen der Primärfolie auf eine Temperatur von ungefähr 100-150°C, vorzugsweise ungefähr 100-120°C, vorzugsweise in einer IR-Einheit,
- Recken und Orientieren der Primärfolie durch ein Simultanorientierungsverfahren, indem die Primärfolienränder mit einer Reihe an Klemmen gehalten werden, die auf Schlitten montiert sind, von denen jeder unabhängig durch Linearinduktionselektrosynchronmotoren angetrieben wird, wo die Klemme/Schlitten-Baugruppe entlang divergierender Reckschienen wandern;
wobei den Linearinduktionssynchronmotoren Wechselströme zugeführt werden, deren Phase und Frequenz auf eine solche Weise moduliert werden, daß die Klemmen/Schlitten einem vorprogrammierten Longitudinallineargeschwindigkeitsprofil folgen, um die gewünschten MD-Reckverhältnisse zu erhalten;
wobei die MD-Reckverhältnisse eine Funktion des Longitudinallineargeschwindigkeitsprofils sind und die TD-Reckverhältnisse gesteuert werden durch die eigentlichen Abstände (Divergenz) zwischen den Reckschienen;
wobei der für den Folienreckschritt verwendete Reckrahmen einen oder mehrere Abschnitte innerhalb eines Reckofens umfaßt, der bei einer Temperatur von ungefähr 150-190°C betrieben wird;
- abschließendes Wärmestabilisieren in TD, das durchgeführt wird, indem die Folie einem geringfügigen TD-Zurückziehen in einem oder mehreren Abschnitten unterzogen wird, was erhältlich ist durch eine Konvergenz der Reckschienen in einem oder mehreren Abschnitten des Reckrahmens, bei Temperaturen von ungefähr 130-140°C;
- wobei die MD-Reckverhältnisse im Bereich von ungefähr 4/1 bis 9/1 liegen und die TD-Reckverhältnisse im Bereich von ungefähr 3/1 bis 7/1 liegen.

9. Uniaxial schrumpfbare Kunststoffolien zur Rundumetikettierung, die erhältlich sind unter Verwendung einer Simultanfolienreckmaschine, bei der die Reckverhältnisse auf kontinuierliche Weise moduliert werden, gemäß dem Verfahren nach Anspruch 8.

10. Verwendung der Kunststoffolien gemäß Anspruch 9 zum Rundumetikettieren.

## Revendications

1. Films plastiques à rétrécissement uniaxial pour étiquetage enveloppant, lesdits films pouvant être obtenus en utilisant une ligne d'étirement simultané dans laquelle on peut moduler les rapports d'étirement d'une façon continue, lesdits films étant faits de compositions de polymères comprenant les polymères suivants :
a) des copolymères de propylène ayant au moins un autre comonomère contenant au moins une insaturation oléfinique, ledit comonomère étant choisi de préférence parmi les alpha oléfines ayant de 2 à 12 atomes de carbone, la quantité totale de comonomère étant comprise entre 0,5 et 25 % en poids, de préférence entre 1 et 7 % en poids, et :
b) un homopolymère d'éthylène ou des copolymères d'éthylène ayant au moins un autre comonomère contenant au moins une insaturation oléfinique, que l'on choisit de préférence parmi les alpha oléfines ayant de 4 à 12 atomes de carbone, la quantité totale de comonomères étant comprise entre 0,5 et 10 % en poids, de préférence entre 1 et 7 % en poids,
la quantité de b) étant comprise entre 2 et 30 %, et de préférence entre 4 et 15 % en poids ; lesdits films rétractables à la chaleur de façon uniaxiale ayant une rétraction MD, mesurée à 130°C pendant 5 minutes selon le procédé OPMA TC4, dans la gamme de 30 % ou supérieure, et une rétraction TD dans la gamme de 2 à 3 %.

2. Films plastiques selon la revendication 1, dans lesquels le composant b) est un copolymère d'éthylène.

3. Films plastiques selon les revendications 1 et 2, dans lesquels le composant a) est un copolymère de propylène avec l'éthylène.

4. Films plastiques selon les revendications 1 à 3, dans lesquels les comonomères contenant au moins une insaturation oléfinique tel qu'indiqué en b) sont le butène, l'hexène, l'octène.

5. Films plastiques selon les revendications 1 à 4, que l'on additionne avec des additifs tels que des agents de glissement, et/ou des agents anti-bloquants, et/ou des agents anti-statiques ; la quantité totale des additifs étant comprise entre 0,05 % et 4 %, de préférence de 0,1 à 2 % en poids.

6. Utilisation des films plastiques selon les revendications 1 à 5 pour l'étiquetage enveloppant.

7. Utilisation selon la revendication 6, dans laquelle on soumet les films à des traitements de couronne, de flamme ou de plasma.

8. Procédé d'étirement horizontal simultané pour préparer les films plastiques selon les revendications 1 à 5, comprenant les étapes suivantes :
- préparation d'un film primaire ayant une épaisseur comprise entre environ 2 et 3 mm par fusion d'une composition polymérique,
- extrusion du film primaire épais sur une filière d'extrusion plate,
- trempe et compactage du film primaire sur la surface d'un rouleau refroidisseur refroidi,
- chauffage du film primaire à une température d'approximativement 100 à 150°C, de préférence d'approximativement 100 à 120°C, de préférence au moyen d'une unité infrarouge.
- étirage et orientation du film primaire au moyen d'un procédé d'orientation simultanée en maintenant les bords du film primaire avec une série d'attaches installées sur des glissières, chacune d'elles étant indépendamment entraînée par des moteurs synchrones à induction électrique linéaire, où les ensembles d'attache/glissière circulent le long de rails d'étirement divergents ; les moteurs synchrones à induction électrique linéaire sont alimentés avec des courants AC dont on module la phase et la fréquence de telle façon que les attaches/glissières suivent un profil de vitesse linéaire longitudinal préprogrammé de façon à obtenir les rapports d'étirement MD désirés ; tandis que les rapports d'étirement MD sont une fonction du profil de vitesse linéaire longitudinale et que l'on commande les rapports d'étirement au moyen de l'espace réel (divergence) entre les rails d'étirement ; le cadre d'étirement que l'on utilise pour l'étape d'étirement du film comprend une ou plusieurs parties à l'intérieur d'un four à étirement fonctionnant à une température de 150 à 190°C approximativement ;
- le fixage thermique final dans TD, que l'on réalise en soumettant le film à une légère rétraction TD dans une ou plusieurs parties, est obtenu au moyen de la convergence des rails d'étirement dans une ou plusieurs parties du cadre d'étirement, à des températures de 130 à 140°C environ ;
- les rapports d'étirement MD sont compris dans la gamme de 4/ 1 approximativement à 9/1, et les rapports d'étirement TD sont compris dans la gamme d'approximativement 3/1 à 7/ 1.

9. Films plastiques à rétrécissement uniaxial pour étiquetage enveloppant, que l'on peut obtenir en utilisant une machine d'étirement de film simultané, dans lesquels on module les rapports d'étirement de façon continue, selon le procédé de la revendication 8.

10. Utilisation des films plastiques selon la revendication 9 pour l'étiquetage enveloppant.
